# EUROPEAN PATENT SPECIFICATION

(11) **EP 4 291 318 B1**
(45) Date of publication and mention of the grant of the patent: **02.07.2025**
(21) Application number: 22725626.0
(22) Date of filing: 05.05.2022
(51) Int. Cl.: B01D 27/08, B01D 29/15

(54) **FILTER CARTRIDGE**
FILTERPATRONE
CARTOUCHE FILTRANTE

(30) Priority: 27.05.2021 US 202163193653 P; 04.02.2022 US 202263306746 P
(43) Date of publication of application: 20.12.2023
(73) Proprietor: Baldwin Filters, Inc., Cleveland, OH 44124 (US)
(72) Inventor: ROUSSEL, James, Ravenna, Nebraska 68869 (US); CALCATERRA, Farrell, Kearney, Nebraska 68847 (US); SCHWEITZER, Stephen W., Kearney, Nebraska 68845 (US); MERRITT, Steven J., Kearney, Nebraska 68845 (US)
(74) Representative: Murgitroyd & Company
(86) International application number: PCT/US2022/027884
(87) International publication number: WO 2022/250923

(56) References cited:
- EP-A1- 1 752 202
- WO-A1-2018/134625
- DE-U1- 202013 011 841
- US-A1- 2012 261 323
- US-A1- 2013 248 464
- US-A1- 2018 193 780

## Description

### FIELD OF THE INVENTION

This invention generally relates to a diesel fuel replacement filter.

### BACKGROUND OF THE INVENTION

Conventional fuel filters are often made using plastic components that are spin-welded to join particular plastic components, such as the base plate and canister, for example. However, spin welding plastic components has proven problematic for a variety of reasons. The spin welding process typically requires complex equipment set up and operation, challenging weld joint geometries, and can be made more difficult by variations in the raw materials. All of these issues may lead to delays in production and/or expensive and time-consuming product failures during development and manufacturing. Therefore, it would be advantageous to have a method of assembly for such fuel filters that does not include spin welding. Such a method would provide significant benefit by eliminating failures and the delays and associated costs that come with the spin welding process.

The following documents may provide technical background to the present disclosure: EP1752202 A; US2018/193780 A; US2013/248464 A; US2012/261323 A.

Embodiments of the invention detailed below represent an improvement to the state of the art with respect to hydraulic filtration devices. These and other advantages of the invention, as well as additional inventive features, will be apparent from the description of the invention provided herein.

### BRIEF SUMMARY OF THE INVENTION

Embodiments of the present invention address some of the concerns set forth above by disclosing a fuel filter replacement, such as might be used in a diesel engine for example, where the fuel filter does not require spin welding to join to pressure critical plastic components, as in conventional fuel filters.

As defined in appended claim 1, a filter cartridge includes a canister configured to hold a filter element. The canister has a canister body with an open end and an end closure. The end closure has a central annular element locating feature, and an annular frame portion circumscribing the central annular element locating feature. The canister body and end closure have cooperating geometry for retaining the end closure to the open end of the canister. The cooperating geometry includes an axial retention mechanism for maintaining an attachment between the canister and the end closure. The axial retention mechanism is configured to maintain the attachment solely via mechanical interference.

In some embodiments, the axial retention mechanism includes an internal annular rib circumscribing an inner surface of the canister, proximate the open end, and an external annular rib circumscribing an outer surface of the flexible portion of the end closure. The external annular rib of the flexible portion of the end closure is configured and arranged to engage the internal annular rib of the canister when the end closure is attached to the open end of the canister. The internal annular rib may extend continuously around the inner surface of the canister. In particular embodiments, the internal annular rib has an average height of five hundredths of an inch with respect to the inner surface of the canister.

In a further embodiment, the external annular rib extends continuously around the outer surface of the flexible portion of the end closure. In more particular embodiments, the external annular rib has an average height of ten hundredths of an inch with respect to the outer surface of the flexible portion of the end closure. In other embodiments, the mechanical interference between the external annular rib and the internal annular rib is at least three hundredths of an inch. As specified in this application, the dimension associated with mechanical interference refers to the distance that one component extends past the closest point of a second component. Thus, the aforementioned embodiment indicates that the external annular rib extends at least three hundredths of an inch beyond the closed part of the internal annular rib and vice versa.

In another embodiment of the invention, an axial end of the flexible portion of the end closure is chamfered to facilitate insertion of the end closure into the canister body. In some embodiments, the end closure includes a groove that extends around a circumference of an outer perimeter surface of the annular frame portion, where the groove is configured to seat an O-ring.

In an alternate embodiment, the axial retention mechanism includes an internal annular rib circumscribing an inner surface of the canister, proximate the open end, and a plurality of flexible tabs spaced around a perimeter edge section of the frame portion. The flexible tabs on the perimeter edge section of the frame portion project in a direction axially inwardly into the canister and are configured and arranged to engage the internal annular rib of the canister when the end closure is attached to the open end of the canister. The flexible tabs may be evenly spaced around the perimeter edge section of the frame portion. Additionally, the flexible tabs may each have a radially outward facing snap tab portion. The filter cartridge may further include a series of axial ribs on the inner surface of the canister extending toward the open end of the canister at least as far as the internal annular rib, where the flexible tabs are arranged to fit between the axial ribs when the end closure is attached to the canister in order to prevent rotation of the end closure relative to the canister body. In some particular embodiments, the internal annular rib has an average height of ten hundredths of an inch with respect to the inner surface of the canister.

In certain particular embodiments, the axial retention mechanism includes a series of axial ribs on an inner surface of the canister, each of which has a shoulder at a distal end of each rib proximate the open end of the canister, and a plurality of flexible tabs spaced around a perimeter edge section of the frame portion. The flexible tabs on the perimeter edge section of the frame portion may project in a direction axially inwardly into the canister, and may be configured and arranged to engage the shoulder of the axial ribs on the canister when the end closure is attached to the open end of the canister. In a more particular embodiment, the plurality of flexible tabs is evenly spaced around the perimeter edge section of the frame portion, and the series of axial ribs is evenly spaced around the inner surface of the canister such that each flexible tab is engaged with a respective axial rib when the end closure is attached to the open end of the canister.

In a further embodiment, each flexible tab includes a slotted portion in which the respective axial rib is seated, wherein the seating of the flexible tab in the slotted portion acts to prevent rotation of the end closure relative to the canister. Additionally, the flexible tabs may each have a radially outward facing snap tab portion, such that the mechanical interference between the outward facing snap tab portion and the shoulder provides axial retention. In more particular embodiments, the mechanical interference between the radially outward facing snap tab portion and the shoulder is at least three hundredths of an inch. The end closure may include a first groove that extends around a circumference of an outer perimeter surface of the annular frame portion, the first groove being configured to seat an O-ring. Furthermore, the canister may include a second groove around a circumference of the inner surface located proximate the first groove when the end closure is attached to the open end of the canister, where the second groove is configured to seat the O-ring.

In yet another embodiment of the invention, the cooperating geometry further includes an anti-rotation mechanism for preventing rotation of the base plate relative to the canister, the anti-rotation mechanism configured to prevent rotation of the base plate relative to the canister solely via mechanical interference. In a particular embodiment, the anti-rotation mechanism has a plurality of axial locating slots and axial locating tabs spaced apart around a perimeter edge section of the frame portion and an outer edge of the open end of the canister. The axial locating tabs and axial locating slots may be configured and arranged to interengage to rotationally align the end closure and the canister when the end closure is attached to the open end of the canister. In some embodiments, the end closure further includes a plurality of radial support ribs projecting between the element locating feature and the rigid attachment portion of the frame portion.

In an alternate embodiment, the anti-rotation mechanism has a plurality of radially-inward projecting tabs spaced apart around the circumference of the interior surface of the canister, and a plurality of radially-inward projecting slots spaced around a perimeter surface of an annular frame portion of the end closure. The engagement between each of the plurality radially-inward projecting tabs and a respective radially-inward projecting slot prevents rotation of the end closure relative to the canister.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a cross-sectional view of a filter cartridge, constructed in accordance with an embodiment of the invention;
FIG. 2. is a perspective view of an end closure for a filter cartridge, constructed in accordance with an embodiment of the invention;
FIG. 3 is a cross-sectional view of a canister for a filter cartridge along with a close-up cross-sectional view of the end closure of FIG. 1 attached to a canister, in accordance with an embodiment of the invention;
FIG. 4 is a cross-sectional view of the end closure, according to an embodiment of the invention;
FIG. 5 is a perspective view of an end closure for a filter cartridge, constructed in accordance with an embodiment of the invention different from that of FIG. 1;
FIG. 6 is a cross-sectional view of a canister for a filter cartridge along with a close-up cross-sectional view of the end closure of FIG. 5 attached to a canister, according to an embodiment of the invention;
FIG. 7 is a perspective view of an end closure for a filter cartridge, constructed in accordance with an embodiment of the invention different from that of FIGS. 1 and 5;
FIG. 8 is an enlarged cross-sectional view of the end closure of FIG. 7 attached to a canister, according to an embodiment of the invention;
FIG. 9 is an enlarged perspective view of an interior portion of the canister, according to an embodiment of the invention;
FIG. 10 is an enlarged cross-sectional view of the end closure and canister showing an O-ring groove, in accordance with an embodiment of the invention;
FIG. 11 is a perspective side view of an end closure with radial splines, constructed in accordance with an embodiment of the invention;
FIG. 12 is an enlarged perspective view of the end closure of FIG. 11 showing a radial spline;
FIG. 13 is an enlarged view of a portion of the canister showing a mating notch to accommodate the radial spline of FIG. 12, according to an embodiment of the invention;
FIG. 14 is a perspective view of a portion of the end closure of FIG. 11 attached to a filter cartridge canister, in accordance with an embodiment of the invention;
FIG. 15 is a perspective view of an end closure/canister assembly, according to an embodiment of the invention; and
FIG. 16 is an enlarged view of the radially inward-projection slot on the end closure, in accordance with an embodiment of the invention.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

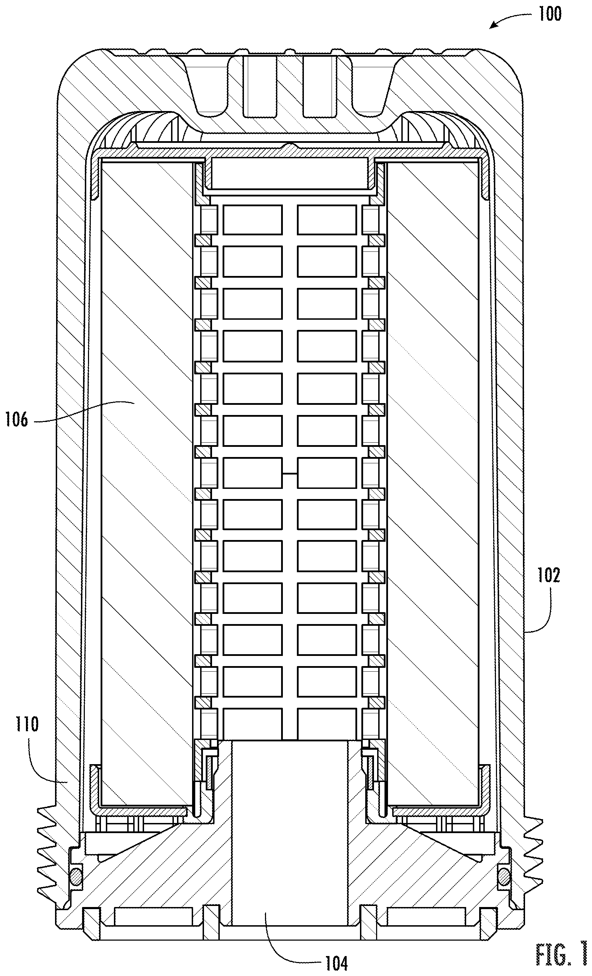

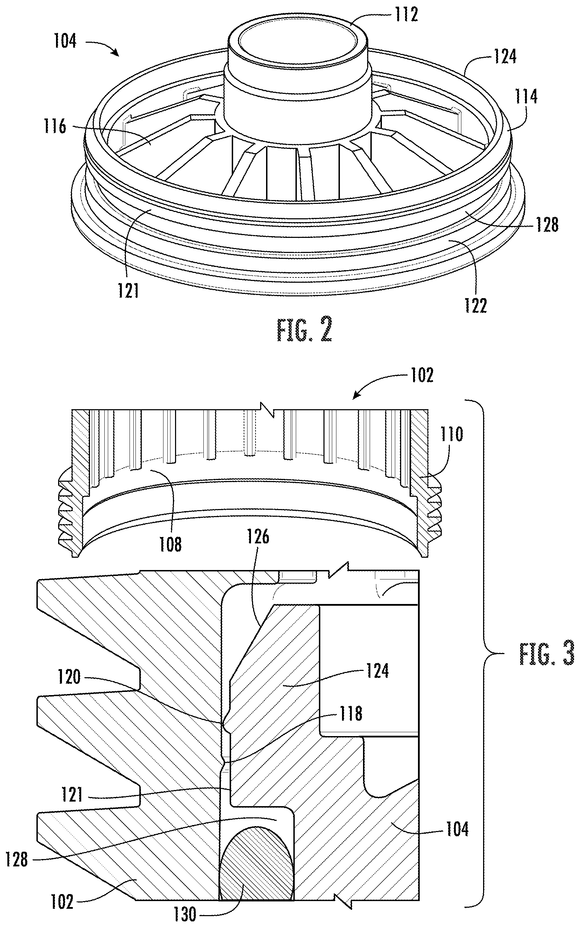

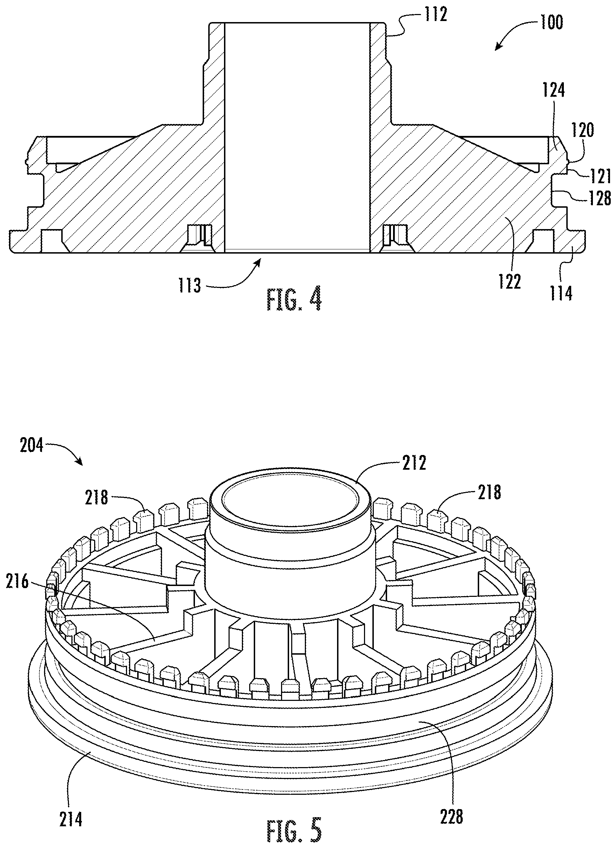

FIG. 1 is a cross-sectional view of a filter cartridge 100, constructed in accordance with an embodiment of the invention. The filter cartridge 100 includes a canister 102 and a base plate which is referred to herein as an end closure 104. The base plate or end closure is typically attached to the canister to hold the filter element in place. In the embodiment shown, the canister 102 is configured to hold a filter element 106 when the end closure 104 is attached to the canister 102. FIG. 2 shows a perspective view of the end closure 104 for the filter cartridge 100, constructed in accordance with an embodiment of the invention. FIG. 3 shows a perspective view of a cross-section for an end portion of the canister 102 for the filter cartridge 100 showing an inner surface 108 of the canister 102, along with an enlarged cross-section of the end closure 104 of FIG. 1 attached to the canister 102. FIG. 4 is a cross-sectional view of the end closure 104, according to an embodiment of the invention.

In certain embodiments of the invention, the canister 102 has a canister body 110 with an open end in which the end closure 104 is inserted to attach to the canister 102. The end closure 104 has a central annular element locating feature 112 that defines a central opening 113, and an annular frame portion 114 circumscribing the central annular element locating feature 112. In a more particular embodiment, the annular frame portion 114 circumscribing the element locating feature 112 includes an annular rigid attachment portion 122 and an annular flexible portion 124 projecting from the rigid attachment portion 122. In embodiments of the invention, the end closure 104 is made from a resilient material such as plastic. As such, because it is not stiffened by support ribs 116, the flexible portion 124 is able to move slightly during assembly of the end closure 104 to the canister 102.

In the embodiment shown, the end closure 104 includes a plurality of radial support ribs 116 projecting between the element locating feature 112 and the annular frame portion 114 to support and connect the central annular element locating feature 112 and annular frame portion 114. In alternate embodiments, the element locating feature 112 and annular frame portion 114 may be connected by spokes, a solid flat plate, an angled flat plate, or a wedge-shaped plate.

In certain embodiments, the canister body 110 and end closure 104 have cooperating geometry for retaining the end closure 104 to the open end of the canister 102. The cooperating geometry may include an axial retention mechanism for maintaining an attachment between the canister 102 and the end closure 104. In the embodiments shown, the axial retention mechanism is configured to maintain the aforementioned attachment solely via mechanical interference.

In some embodiments, the axial retention mechanism includes an internal annular rib 118 circumscribing an inner surface 108 of the canister 102, proximate the open end, and an external annular rib 120 circumscribing an outer surface 121 of the flexible portion 124 of the end closure. The external annular rib 120 of the flexible portion 124 of the end closure 104 is configured and arranged to engage the internal annular rib 118 of the canister 102 when the end closure 104 is attached to the open end of the canister 102. The internal annular rib 118 may extend continuously around the inner surface 108 of the canister 102. In particular embodiments, the internal annular rib 118 has an average height of five hundredths of an inch with respect to the inner surface 108 of the canister 102.

In a further embodiment, the external annular rib 120 extends continuously around the outer surface 121 of the flexible portion 124 of the end closure 104. In more particular embodiments, the external annular rib 120 has an average height of ten hundredths of an inch with respect to the outer surface 121 of the flexible portion 124 of the end closure 104. In other embodiments, the mechanical interference between the external annular rib 120 and the internal annular rib 118 is at least three hundredths of an inch. As specified in this application, the dimension associated with mechanical interference refers to the distance that one component extends past the closest point of a second component. Thus, the aforementioned embodiment indicates that the external annular rib 120 extends at least three hundredths of an inch beyond the closed part of the internal annular rib 118 and vice versa.

In another embodiment of the invention, an axial end 126 of the flexible portion 124 of the end closure 104 is chamfered to facilitate insertion of the end closure 104 into the canister body 110. In some embodiments, the end closure 104 includes a groove 128 that extends around a circumference of the outer perimeter surface of the annular rigid attachment portion 122, where the groove 128 is configured to seat an O-ring 130.

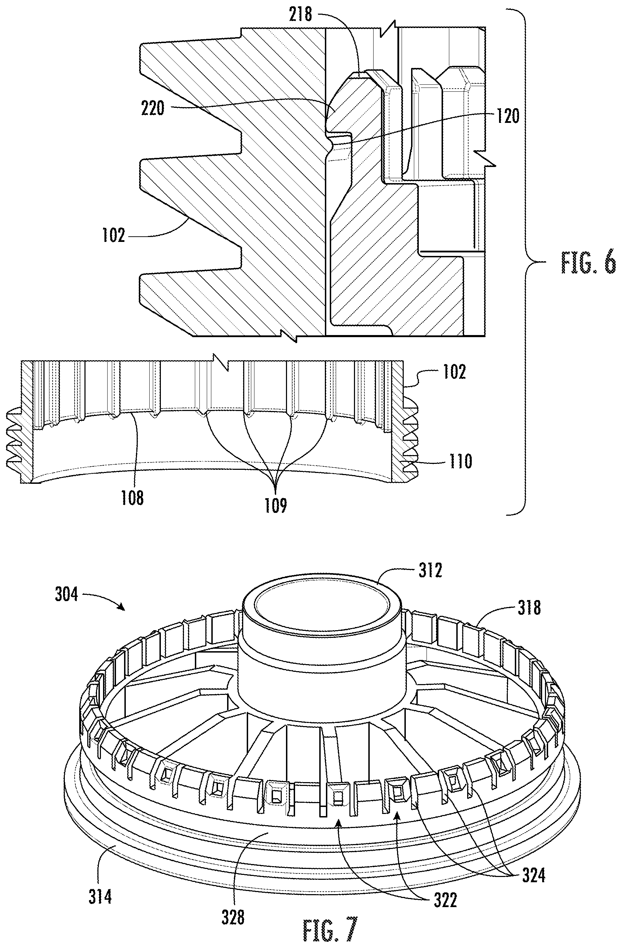

FIG. 5 is a perspective view of a different embodiment of an end closure 204 for the filter cartridge 100, constructed in accordance with an embodiment of the invention different from that of FIG. 1. FIG. 6 is a cross-sectional view of the canister 102 for filter cartridge 100 along with a close-up cross-sectional view of the end closure 204 of FIG. 5 attached to the canister 102, according to an embodiment of the invention.

Like the end closure 104 of FIGS. 1-4, the end closure 204 of FIGS. 5-6 has a central annular element locating feature 212 that defines a central opening, and an annular frame portion 214 circumscribing the central annular element locating feature 212. In embodiments of the invention, the end closure 204 is made from a resilient material such as plastic. In the embodiment shown, the end closure 204 includes a plurality of radial support ribs 216 projecting between the element locating feature 212 and the annular frame portion 214 to support and connect the central annular element locating feature 212 and annular frame portion 214. In alternate embodiments, the element locating feature 212 and annular frame portion 214 may be connected by spokes, a solid flat plate, an angled flat plate, or a wedge-shaped plate. Additionally, the end closure 204 may include a groove 228 that extends around a circumference of an outer perimeter surface of the annular frame portion 214, with the groove 228 being configured to seat the O-ring 130 (shown in FIG. 3).

In this embodiment, the axial retention mechanism includes the internal annular rib 120 circumscribing the inner surface 108 of the canister 102 proximate the open end, and a plurality of flexible tabs 218 spaced around a perimeter edge section of the frame portion 214. The flexible tabs 218 on the perimeter edge section of the frame portion 214 project in a direction axially inwardly into the canister 102 and are configured and arranged to engage the internal annular rib 120 of the canister 102 when the end closure 104 is attached to the open end of the canister 102. The flexible tabs 218 may be evenly spaced around the perimeter edge section of the frame portion 214. Additionally, the flexible tabs 218 may each have a radially outward facing snap tab portion 220. Additionally, the outward facing snap tab portion 220 may be chamfered to facilitate insertion of the end closure 204 into the canister body 110.

The filter canister 102 may further include a series of axial ribs 109 on the inner surface 108 of the canister 102 extending toward the open end of the canister 102 at least as far as the internal annular rib 120, where the flexible tabs 218 are arranged to fit between the axial ribs 109 when the end closure 204 is attached to the canister 102 in order to prevent rotation of the end closure 102 relative to the canister body 110. During insertion of the end closure 204 into the canister 102, the flexible tabs 218 flex radially inward as the radially outward facing snap tab portion 220 engages the internal annular rib 120. As the radially outward facing snap tab portion 220 moves past the internal annular rib 120, the flexible tab 218 flexes back to its normal position. The mechanical interference between the snap tab portion 220 and the internal annular rib 120 provide axial retention between the end closure 204 and the canister 102. In some particular embodiments, the internal annular rib 120 has an average height of ten hundredths of an inch with respect to the inner surface 108 of the canister 102.

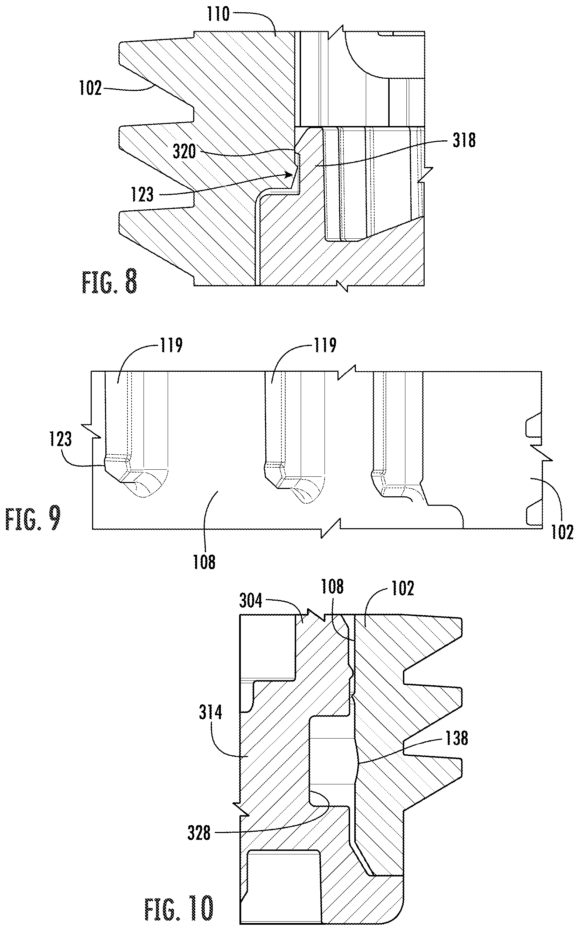

FIG. 7 is a perspective view of yet another end closure 304 for the filter cartridge 100, constructed in accordance with an embodiment of the invention different from that of FIGS. 1 and 4. FIG. 8 is an enlarged cross-sectional view of the end closure 304 of FIG. 7 shown attached to the canister 102, according to an embodiment of the invention. FIG. 9 is an enlarged perspective view of an interior portion of the canister 102, according to an embodiment of the invention.

Like the end closures 104, 204 described above, the end closure 304 of FIGS. 5-6 has a central annular element locating feature 312 that defines a central opening, and an annular frame portion 314 circumscribing the central annular element locating feature 312. In embodiments of the invention, the end closure 304 is made from a resilient material such as plastic. In the embodiment shown, the end closure 304 includes a plurality of radial support ribs 316 projecting between the element locating feature 312 and the annular frame portion 314 to support and connect the central annular element locating feature 312 and annular frame portion 314. In alternate embodiments, the element locating feature 312 and annular frame portion 314 may be connected by spokes, a solid flat plate, an angled flat plate, or a wedge-shaped plate.

In this embodiment, the axial retention mechanism includes a series of axial ribs 119 on an inner surface 108 of the canister 102, each of which has a shoulder 123 at a distal end of each rib 119 proximate the open end of the canister 102, and a plurality of flexible tabs 318 spaced around a perimeter edge section of the frame portion 314. The flexible tabs 318 on the perimeter edge section of the frame portion 314 may project in a direction radially inwardly into the canister 102, and may be configured and arranged to engage the shoulder 123 of the axial ribs 119 on the canister 102 when the end closure 304 is attached to the open end of the canister 102.

In a more particular embodiment, the plurality of flexible tabs 318 is evenly spaced around the perimeter edge section of the frame portion 314, and the series of axial ribs 119 is evenly spaced around the inner surface 108 of the canister 102 such that each flexible tab 318 is engaged with a respective axial rib 119 when the end closure 304 is attached to the open end of the canister 102. During insertion of the end closure 304 into the canister 102, the flexible tabs 318 flex radially inward as the radially outward facing snap tab portion 320 engages the shoulder 123. As the radially outward facing snap tab portion 320 moves past the shoulder 123, the flexible tab 318 flexes back to its normal position.

In a further embodiment, each flexible tab 318 includes a slotted portion 322 in which the respective axial rib 119 is seated. The slotted portion 322 has edge members 324 positioned on each side of the axial rib 119 when the rib 119 is seated in the slotted portion 322. The seating of the flexible tab 318 in the slotted portion acts to prevent rotation of the end closure 304 relative to the canister 102. Additionally, the flexible tabs 318 may each have a radially outward facing snap tab portion 320, such that the mechanical interference between the outward facing snap tab portion 320 and the shoulder 123 provides the axial retention. In more particular embodiments, the mechanical interference between the radially outward facing snap tab portion 320 and the shoulder 123 is at least three hundredths of an inch.

As used in this application, the dimension associated with mechanical interference refers to the distance that one component extends past the closest point of a second component. Thus, the preceding exemplary embodiment is one in which the radially outward facing snap tab portion 320 extends at least three hundredths of an inch beyond the closed part of the shoulder 123 and vice versa. In a particular embodiment, the outward facing snap tab portion 320 is chamfered to facilitate insertion of the end closure 304 into the canister body 110.

The end closure 304 may include a first groove 328 that extends around a circumference of an outer perimeter surface of the annular frame portion 314, the first groove 328 being configured to seat the O-ring 130. FIG. 10 shows a close-up cross-sectional view of the first groove 328 of the end closure 304 attached to the canister 102. The O-ring 130 is omitted from this view to make it easier to see the features of the end closure 304 and canister 102. In this embodiment, the canister 102 may include a second groove 138 that extends around a circumference of the inner surface 108 located proximate the first groove 328 when the end closure 304 is attached to the open end of the canister 102, where the second groove 138 is also configured to seat the O-ring 130 (shown in FIG. 3). Compression of the O-ring 130 in the first groove 328 and second groove 138, when the end closure 304 is attached to the canister 102, aids in the axial retention and in preventing rotation of the end closure 304 with respect to the canister 102.

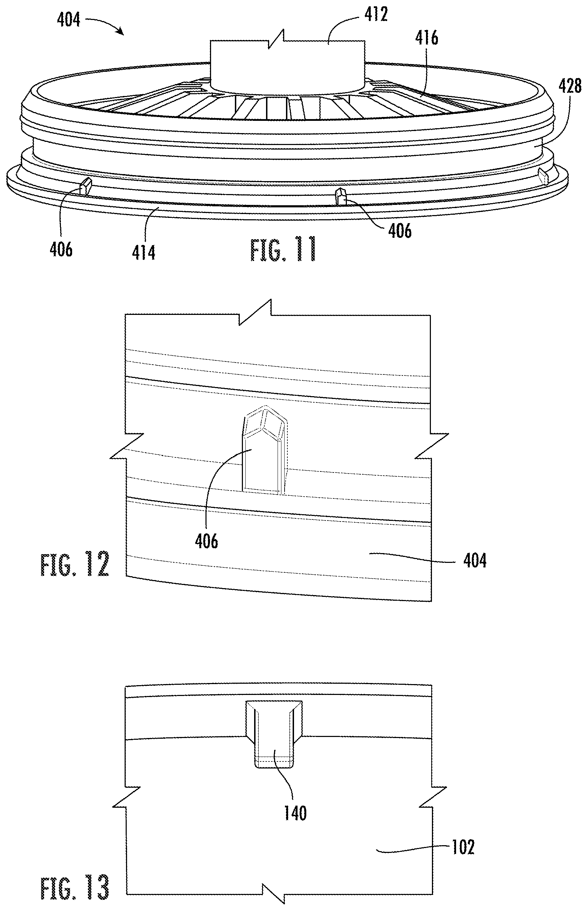

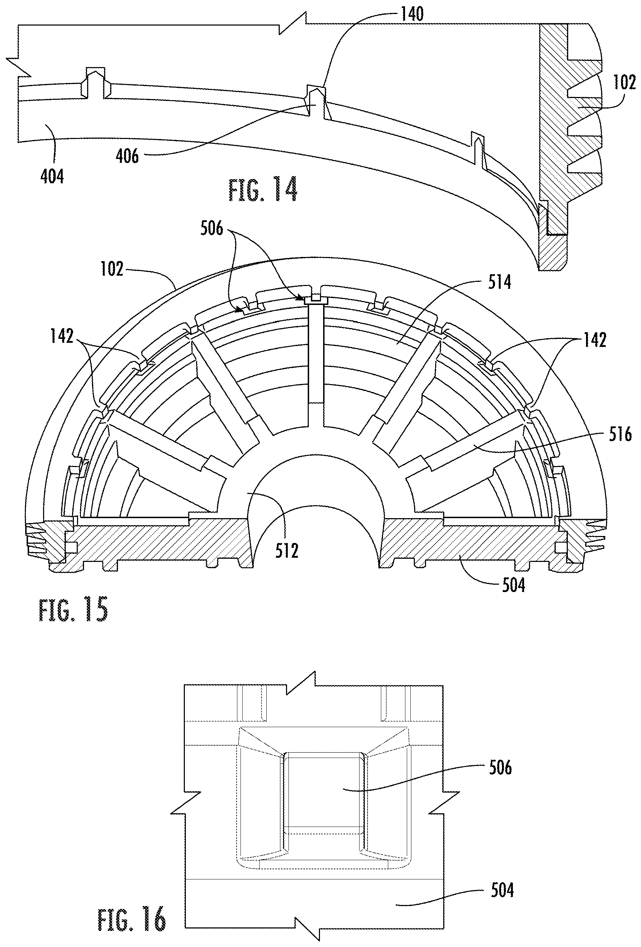

FIG. 11 is a perspective side view of an end closure 404 with radial splines 406, constructed in accordance with an embodiment of the invention, while FIG. 12 shows an enlarged perspective view of the end closure 404 and of a radial spline 406. FIG. 13 is an enlarged view of a portion of the canister 102 showing a mating notch 140 to accommodate the radial spline 406 of FIG. 12, in accordance with an embodiment of the invention. FIG. 14 is a perspective view of a portion of the end closure 404 attached to a filter cartridge canister 102, in accordance with an embodiment of the invention. For the sake of clarity, FIG. 14 only shows the portion of the end closure 404 with the radial spline 406 and the portion of the canister 102 with the mating notches 140 that engage the radial splines 406.

Like the end closures 104, 204, 304 described above, the end closure 404 of FIGS. 11-12 has a central annular element locating feature 412 that defines a central opening, and an annular frame portion 414 circumscribing the central annular element locating feature 412. In embodiments of the invention, the end closure 404 is made from a resilient material such as plastic. In the embodiment shown, the end closure 404 includes a plurality of radial support ribs 416 projecting between the element locating feature 412 and the annular frame portion 414 to support and connect the central annular element locating feature 412 and annular frame portion 414. In alternate embodiments, the element locating feature 412 and annular frame portion 414 may be connected by spokes, a solid flat plate, an angled flat plate, or a wedge-shaped plate.

In this embodiment, the cooperating geometry of the end closure 404 and canister 102 as described above, constitutes an anti-rotation mechanism for preventing rotation of the end closure 404 relative to the canister 102. Further, this anti-rotation mechanism is configured to prevent rotation of the end closure 404 relative to the canister 102 solely via mechanical interference. As shown in FIGS. 11-14, the end closure 404 has a plurality of axially-extending (and radially-extending) radial splines 406, which function as locating tabs, spaced apart around a perimeter edge section of the frame portion 414. The radial splines 406 may be evenly spaced around the entire circumference of the annular frame portion 414 though embodiments with uneven spacing of radial splines 406 is envisioned. Additionally, the end closure 404 may include a groove 428 that extends around a circumference of an outer perimeter surface of the annular frame portion 414, the groove 428 being configured to seat the O-ring 130 (shown in FIG. 3).

The canister 102 includes a plurality of mating notches 140 which are shown as axially-extending locating slots spaced apart around an outer edge of the open end of the canister 102. The radial splines 406 and mating notches 140 may be configured and arranged to interengage to rotationally align the end closure 404 and the canister 102 when the end closure 404 is attached to the open end of the canister 102.

Another anti-rotation mechanism is shown in FIGS. 15 and 16. In this embodiment, the canister 102 includes a plurality of radially-inward projecting tabs 142 spaced apart around the circumference of the interior surface 108 of the canister 102. The radially-inward projecting tabs 142 are designed the engage a plurality of radially-inward projecting slots 506 spaced around a perimeter surface of an annular frame portion 514 of the end closure 504. When the end closure 504 is assembled to the canister 102, each of the radially-inward projecting tabs 142 seats with a radially-inward projecting slot 506. This engagement between radially-inward projecting tabs 142 and radially-inward projecting slot 506 prevents rotation of the end closure 504 relative to the canister 102.

Like the end closures 104, 204, 304, 404 described above, the end closure 504 of FIG. 15 has a central annular element locating feature 512 that defines a central opening, and an annular frame portion 514 circumscribing the central annular element locating feature 512. In embodiments of the invention, the end closure 504 is made from a resilient material such as plastic. In the embodiment shown, the end closure 504 includes a plurality of radial support ribs 416 projecting between the element locating feature 412 and the annular frame portion 514 to support and connect the central annular element locating feature 512 and annular frame portion 514.

The foregoing description discloses exemplary embodiments of a fuel filter with external housing components that are assembled via mechanical interference connection. For an all-plastic spin-on filter, the base plate or end closure could be threaded into the filter canister or these two components could be spin welded to form the necessary attachment. Threading is very time-consuming as the parts must be aligned, as it takes a fair amount of time to run the threads together. As explained above, spin welding has certain shortcomings as well. Assembling the components by relying on mechanical interference to maintain the attachment is a faster alternative to threading without all the complications that come with spin welding.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A filter cartridge (100) comprising:
a canister (102) configured to hold a filter element (106), the canister (102) having a canister body (110) with an open end and an end closure (104), the end closure (104) having:
a central annular element locating feature (112); and
an annular frame portion (114) circumscribing the central annular element locating feature (112);
wherein the canister body (110) and end closure (104) have cooperating geometry for retaining the end closure (104) to the open end of the canister, the cooperating geometry including:
an axial retention mechanism for maintaining an attachment between the canister (102) and the end closure (104), the axial retention mechanism configured to maintain the attachment solely via mechanical interference.

2. The filter cartridge of claim 1, wherein the axial retention mechanism comprises:
an internal annular rib (118) circumscribing an inner surface (108) of the canister, proximate the open end; and
an external annular rib (120) circumscribing an outer surface (121) of a flexible portion (124) of the end closure, the external annular rib (120) of the flexible portion of the end closure configured and arranged to engage the internal annular rib (118) of the canister when the end closure (104) is attached to the open end of the canister (102).

3. The filter cartridge of claim 2, wherein the internal annular rib (118) extends continuously around the inner surface (108) of the canister.

4. The filter cartridge of claim 2, wherein the external annular rib (120) extends continuously around the outer surface (121) of the flexible portion (124) of the end closure.

5. The filter cartridge of claim 2, wherein an axial end (126) of the flexible portion (124) of the end closure is chamfered to facilitate insertion of the end closure (104) into the canister body (110).

6. The filter cartridge of claim 2, wherein the end closure (104) includes a groove (128) that extends around a circumference of an outer perimeter surface of the annular frame portion (214), the groove (228) configured to seat an O-ring (130).

7. The filter cartridge of claim 1, wherein the axial retention mechanism comprises:
an internal annular rib (118) circumscribing an inner surface (108) of the canister, proximate the open end; and
a plurality of flexible tabs (218) spaced around a perimeter edge section of the frame portion (214), the flexible tabs (218) on the perimeter edge section of the frame portion (214) projecting in a direction axially inwardly into the canister (102) and configured and arranged to engage the internal annular rib (118) of the canister when the end closure (204) is attached to the open end of the canister.

8. The filter cartridge of claim 7, wherein the flexible tabs (218) each have a radially outward facing snap tab portion (220).

9. The filter cartridge of claim 7, further including a series of axial ribs (109) on the inner surface (108) of the canister extending toward the open end of the canister at least as far as the internal annular rib (118), the flexible tabs (218) arranged to fit between the axial ribs (109) when the end closure (204) is attached to the canister (102) to prevent rotation of the end closure (204) relative to the canister body (110).

10. The filter cartridge of claim 1, wherein the axial retention mechanism comprises:
a series of axial ribs (119) on an inner surface (108) of the canister, each of which has a shoulder (123) at a distal end of each rib (119) proximate the open end of the canister; and
a plurality of flexible tabs (318) spaced around a perimeter edge section of the frame portion (314), the flexible tabs (318) on the perimeter edge section of the frame portion (314) projecting in a direction axially inwardly into the canister and configured and arranged to engage the shoulder (123) of the axial ribs (119) on the canister when the end closure (304) is attached to the open end of the canister.

11. The filter cartridge of claim 10, wherein the plurality of flexible tabs (318) is evenly spaced around the perimeter edge section of the frame portion (314), and the series of axial ribs (119) is evenly spaced around the inner surface (108) of the canister such that each flexible tab (318) is engaged with a respective axial rib (119) when the end closure (304) is attached to the open end of the canister; and
wherein each flexible tab (318) includes a slotted portion (322) in which the respective axial rib (119) is seated, wherein the seating of the flexible tab in the slotted portion (322) acts to prevent rotation of the end closure (304) relative to the canister (102).

12. The filter cartridge of claim 10, wherein the flexible tabs (318) each have a radially outward facing snap tab portion (320), wherein the mechanical interference between the outward facing snap tab portion (320) and the shoulder (123) provides axial retention.

13. The filter cartridge of claim 10, wherein the end closure (304) includes a first groove (328) that extends around a circumference of an outer perimeter surface of the annular frame portion (314), the first groove (328) configured to seat an O-ring (130); and
wherein the canister includes a second groove (138) around a circumference of the inner surface (108) located proximate the first groove (328) when the end closure (304) is attached to the open end of the canister, the second groove (128) configured to seat the O-ring (130).

14. The filter cartridge of claim 1, wherein the cooperating geometry further includes an anti-rotation mechanism for preventing rotation of the end closure (404) relative to the canister (102), the anti-rotation mechanism configured to prevent rotation of the end closure (404) relative to the canister (102) solely via mechanical interference.

15. The filter cartridge of claim 14, wherein the anti-rotation mechanism comprises:
a plurality of axial locating slots (140) and axial locating tabs (406) spaced apart around a perimeter edge section of the frame portion (414) and an outer edge of the open end of the canister, the axial locating tabs (406) and axial locating slots (140) configured and arranged to interengage to rotationally align the end closure (404) and the canister when the end closure (404) is attached to the open end of the canister.

16. The filter cartridge of claim 14, wherein the anti-rotation mechanism comprises:
a plurality of radially-inward projecting tabs (142) spaced apart around the circumference of the interior surface (108) of the canister; and
a plurality of radially-inward projecting slots (506) spaced around a perimeter surface of an annular frame portion (514) of the end closure (504);
wherein engagement between each of the plurality radially-inward projecting tabs (142) and a respective radially-inward projecting slot (506) prevents rotation of the end closure (504) relative to the canister (102).

17. The filter cartridge of claim 1, wherein the end closure (104; 204; 304; 404; 504) further includes a plurality of radial support ribs (116; 216; 316; 416) projecting between the element locating feature (112; 212; 312; 412) and the rigid attachment portion of the frame portion (114; 214; 314; 414; 514).

## Patentansprüche

1. Eine Filterpatrone (100), die Folgendes beinhaltet:
einen Kanister (102), der so konfiguriert ist, dass er ein Filterelement (106) hält, wobei der Kanister (102) einen Kanisterkörper (110) mit einem offenen Ende und einen Endverschluss (104) aufweist, wobei der Endverschluss (104) Folgendes aufweist:
ein zentrales ringförmiges Elementpositionierungsmerkmal (112); und
einen ringförmigen Rahmenabschnitt (114), der das zentrale ringförmige Elementpositionierungsmerkmal (112) umschreibt;
wobei der Kanisterkörper (110) und der Endverschluss (104) eine zusammenwirkende Geometrie zum Festhalten des Endverschlusses (104) an dem offenen Ende des Kanisters aufweisen, wobei die zusammenwirkende Geometrie Folgendes umfasst:
einen axialen Festhaltemechanismus zum Beibehalten einer Befestigung zwischen dem Kanister (102) und dem Endverschluss (104), wobei der axiale Festhaltemechanismus so konfiguriert ist, dass er die Befestigung ausschließlich mittels mechanischer Verschränkung beibehält.

2. Filterpatrone gemäß Anspruch 1, wobei der axiale Festhaltemechanismus Folgendes beinhaltet:
eine innere ringförmige Rippe (118), die eine Innenfläche (108) des Kanisters in der Nähe des offenen Endes umschreibt; und
eine äußere ringförmige Rippe (120), die eine Außenfläche (121) eines flexiblen Abschnitts (124) des Endverschlusses umschreibt, wobei die äußere ringförmige Rippe (120) des flexiblen Abschnitts des Endverschlusses so konfiguriert und angeordnet ist, dass sie mit der inneren ringförmigen Rippe (118) des Kanisters in Eingriff kommt, wenn der Endverschluss (104) an dem offenen Ende des Kanisters (102) befestigt wird.

3. Filterpatrone gemäß Anspruch 2, wobei sich die innere ringförmige Rippe (118) kontinuierlich um die Innenfläche (108) des Kanisters erstreckt.

4. Filterpatrone gemäß Anspruch 2, wobei sich die äußere ringförmige Rippe (120) kontinuierlich um die Außenfläche (121) des flexiblen Abschnitts (124) des Endverschlusses erstreckt.

5. Filterpatrone gemäß Anspruch 2, wobei ein axiales Ende (126) des flexiblen Abschnitts (124) des Endverschlusses abgeschrägt ist, um das Einsetzen des Endverschlusses (104) in den Kanisterkörper (110) zu erleichtern.

6. Filterpatrone gemäß Anspruch 2, wobei der Endverschluss (104) eine Nut (128) umfasst, die sich um eine Peripherie einer Außenumfangsfläche des ringförmigen Rahmenabschnitts (214) erstreckt, wobei die Nut (228) so konfiguriert ist, dass sie einen O-Ring (130) aufnimmt.

7. Filterpatrone gemäß Anspruch 1, wobei der axiale Festhaltemechanismus Folgendes beinhaltet:
eine innere ringförmige Rippe (118), die eine Innenfläche (108) des Kanisters in der Nähe des offenen Endes umschreibt; und
eine Vielzahl von flexiblen Laschen (218), die um ein Umfangskantenteilstück des Rahmenabschnitts (214) herum voneinander beabstandet sind, wobei die flexiblen Laschen (218) an dem Umfangskantenteilstück des Rahmenabschnitts (214) in einer Richtung axial nach innen in den Kanister (102) hinein vorstehen und so konfiguriert und angeordnet sind, dass sie mit der inneren ringförmigen Rippe (118) des Kanisters in Eingriff kommen, wenn der Endverschluss (204) an dem offenen Ende des Kanisters befestigt wird.

8. Filterpatrone gemäß Anspruch 7, wobei die flexiblen Laschen (218) jeweils einen radial nach außen weisenden Schnapplaschenabschnitt (220) aufweisen.

9. Filterpatrone gemäß Anspruch 7, die ferner eine Reihe von axialen Rippen (109) auf der Innenfläche (108) des Kanisters umfasst, die sich zu dem offenen Ende des Kanisters mindestens bis zu der inneren ringförmigen Rippe (118) hin erstrecken, wobei die flexiblen Laschen (218) so angeordnet sind, dass sie zwischen die axialen Rippen (109) passen, wenn der Endverschluss (204) an dem Kanister (102) befestigt ist, um eine Drehung des Endverschlusses (204) relativ zu dem Kanisterkörper (110) zu verhindern.

10. Filterpatrone gemäß Anspruch 1, wobei der axiale Festhaltemechanismus Folgendes beinhaltet:
eine Reihe von axialen Rippen (119) auf einer Innenfläche (108) des Kanisters, von denen jede eine Schulter (123) an einem distalen Ende jeder Rippe (119) in der Nähe des offenen Endes des Kanisters aufweist; und
eine Vielzahl von flexiblen Laschen (318), die um ein Umfangskantenteilstück des Rahmenabschnitts (314) herum voneinander beabstandet sind, wobei die flexiblen Laschen (318) an dem Umfangskantenteilstück des Rahmenabschnitts (314) in einer Richtung axial nach innen in den Kanister vorstehen und so konfiguriert und angeordnet sind, dass sie mit der Schulter (123) der axialen Rippen (119) an dem Kanister in Eingriff kommen, wenn der Endverschluss (304) an dem offenen Ende des Kanisters befestigt wird.

11. Filterpatrone gemäß Anspruch 10, wobei die Vielzahl von flexiblen Laschen (318) gleichmäßig um das Umfangskantenteilstück des Rahmenabschnitts (314) herum voneinander beabstandet ist und die Reihe von axialen Rippen (119) gleichmäßig um die Innenfläche (108) des Kanisters herum voneinander beabstandet ist, sodass jede flexible Lasche (318) mit einer entsprechenden axialen Rippe (119) in Eingriff steht, wenn der Endverschluss (304) an dem offenen Ende des Kanisters befestigt ist; und wobei jede flexible Lasche (318) einen geschlitzten Abschnitt (322) umfasst, in dem die jeweilige axiale Rippe (119) sitzt, wobei der Sitz der flexiblen Lasche in dem geschlitzten Abschnitt (322) dazu dient, eine Drehung des Endverschlusses (304) relativ zu dem Kanister (102) zu verhindern.

12. Filterpatrone gemäß Anspruch 10, wobei die flexiblen Laschen (318) jeweils einen radial nach außen weisenden Schnapplaschenabschnitt (320) aufweisen, wobei das mechanische Verschränken zwischen dem nach außen weisenden Schnapplaschenabschnitt (320) und der Schulter (123) für axiale Festhaltung sorgt.

13. Filterpatrone gemäß Anspruch 10, wobei der Endverschluss (304) eine erste Nut (328) umfasst, die sich um eine Peripherie einer Außenumfangsfläche des ringförmigen Rahmenabschnitts (314) erstreckt, wobei die erste Nut (328) so konfiguriert ist, dass sie einen O-Ring (130) aufnimmt; und
wobei der Kanister eine zweite Nut (138) umfasst, die sich um eine Peripherie der Innenfläche (108) erstreckt und in der Nähe der ersten Nut (328) angeordnet ist, wenn der Endverschluss (304) an dem offenen Ende des Kanisters befestigt ist, wobei die zweite Nut (128) so konfiguriert ist, dass sie den O-Ring (130) aufnimmt.

14. Filterpatrone gemäß Anspruch 1, wobei die zusammenwirkende Geometrie ferner einen Anti-Dreh-Mechanismus umfasst, um eine Drehung des Endverschlusses (404) relativ zu dem Kanister (102) zu verhindern, wobei der Anti-Dreh-Mechanismus so konfiguriert ist, dass er eine Drehung des Endverschlusses (404) relativ zu dem Kanister (102) ausschließlich mittels mechanischer Verschränkung verhindert.

15. Filterpatrone gemäß Anspruch 14, wobei der Anti-Dreh-Mechanismus Folgendes beinhaltet:
eine Vielzahl von axialen Positionierungsschlitzen (140) und axialen Positionierungslaschen (406), die um ein Umfangskantenteilstück des Rahmenabschnitts (414) und eine Außenkante des offenen Endes des Kanisters herum voneinander beabstandet sind, wobei die axialen Positionierungslaschen (406) und die axialen Positionierungsschlitze (140) so konfiguriert und angeordnet sind, dass sie ineinander eingreifen, um den Endverschluss (404) und den Kanister drehend auszurichten, wenn der Endverschluss (404) an dem offenen Ende des Kanisters befestigt wird.

16. Filterpatrone gemäß Anspruch 14, wobei der Anti-Dreh-Mechanismus Folgendes beinhaltet:
eine Vielzahl von radial nach innen vorstehenden Laschen (142), die um die Peripherie der Innenfläche (108) des Kanisters herum voneinander beabstandet sind; und
eine Vielzahl von radial nach innen vorstehenden Schlitzen (506), die um eine Umfangsfläche eines ringförmigen Rahmenabschnitts (514) des Endverschlusses (504) herum voneinander beabstandet sind;
wobei der Eingriff zwischen jeder der Vielzahl von radial nach innen vorstehenden Laschen (142) und einem entsprechenden radial nach innen vorstehenden Schlitz (506) eine Drehung des Endverschlusses (504) relativ zu dem Kanister (102) verhindert.

17. Filterpatrone gemäß Anspruch 1, wobei der Endverschluss (104; 204; 304; 404; 504) ferner eine Vielzahl von radialen Stützrippen (116; 216; 316; 416) umfasst, die zwischen dem Elementpositionierungsmerkmal (112; 212; 312; 412) und dem starren Befestigungsabschnitt des Rahmenabschnitts (114; 214; 314; 414; 514) vorstehen.

## Revendications

1. Une cartouche filtrante (100) comprenant :
un boîtier (102) configuré pour contenir un élément filtrant (106), le boîtier (102) ayant un corps de boîtier (110) doté d'une extrémité ouverte et d'une fermeture d'extrémité (104), la fermeture d'extrémité (104) ayant :
un organe de positionnement d'élément annulaire central (112) ; et
une portion formant châssis annulaire (114) circonscrivant l'organe de positionnement d'élément annulaire central (112) ;
où le corps de boîtier (110) et la fermeture d'extrémité (104) ont une géométrie coopérante pour retenir la fermeture d'extrémité (104) sur l'extrémité ouverte du boîtier, la géométrie coopérante incluant :
un mécanisme de retenue axiale pour maintenir une fixation entre le boîtier (102) et la fermeture d'extrémité (104), le mécanisme de retenue axiale étant configuré pour maintenir la fixation uniquement par le biais d'une interférence mécanique.

2. La cartouche filtrante de la revendication 1, où le mécanisme de retenue axiale comprend :
une nervure annulaire interne (118) circonscrivant une surface intérieure (108) du boîtier, à proximité de l'extrémité ouverte ; et
une nervure annulaire externe (120) circonscrivant une surface extérieure (121) d'une portion flexible (124) de la fermeture d'extrémité, la nervure annulaire externe (120) de la portion flexible de la fermeture d'extrémité étant configurée et agencée pour se mettre en prise avec la nervure annulaire interne (118) du boîtier lorsque la fermeture d'extrémité (104) est fixée à l'extrémité ouverte du boîtier (102).

3. La cartouche filtrante de la revendication 2, où la nervure annulaire interne (118) s'étend continûment autour de la surface intérieure (108) du boîtier.

4. La cartouche filtrante de la revendication 2, où la nervure annulaire externe (120) s'étend continûment autour de la surface extérieure (121) de la portion flexible (124) de la fermeture d'extrémité.

5. La cartouche filtrante de la revendication 2, où une extrémité axiale (126) de la portion flexible (124) de la fermeture d'extrémité est chanfreinée afin de faciliter une insertion de la fermeture d'extrémité (104) dans le corps de boîtier (110).

6. La cartouche filtrante de la revendication 2, où la fermeture d'extrémité (104) inclut une rainure (128) qui s'étend autour d'une circonférence d'une surface de périmètre extérieur de la portion formant châssis annulaire (214), la rainure (228) étant configurée pour loger un joint torique (130).

7. La cartouche filtrante de la revendication 1, où le mécanisme de retenue axiale comprend :
une nervure annulaire interne (118) circonscrivant une surface intérieure (108) du boîtier, à proximité de l'extrémité ouverte ; et
une pluralité de pattes flexibles (218) espacées autour d'une section formant bord de périmètre de la portion formant châssis (214), les pattes flexibles (218) sur la section formant bord de périmètre de la portion formant châssis (214) faisant saillie dans une direction axialement vers l'intérieur jusque dans le boîtier (102) et étant configurées et agencées pour se mettre en prise avec la nervure annulaire interne (118) du boîtier lorsque la fermeture d'extrémité (204) est fixée à l'extrémité ouverte du boîtier.

8. La cartouche filtrante de la revendication 7, où les pattes flexibles (218) ont chacune une portion de patte encliquetable (220) radialement tournée vers l'extérieur.

9. La cartouche filtrante de la revendication 7, incluant en outre une série de nervures axiales (109) sur la surface intérieure (108) du boîtier s'étendant vers l'extrémité ouverte du boîtier au moins jusqu'à la nervure annulaire interne (118), les pattes flexibles (218) étant agencées pour s'emboîter entre les nervures axiales (109) lorsque la fermeture d'extrémité (204) est fixée au boîtier (102) afin d'empêcher une rotation de la fermeture d'extrémité (204) par rapport au corps de boîtier (110).

10. La cartouche filtrante de la revendication 1, où le mécanisme de retenue axiale comprend :
une série de nervures axiales (119) sur une surface intérieure (108) du boîtier, chacune desquelles ayant un épaulement (123) au niveau d'une extrémité distale de chaque nervure (119) à proximité de l'extrémité ouverte du boîtier ; et
une pluralité de pattes flexibles (318) espacées autour d'une section formant bord de périmètre de la portion formant châssis (314), les pattes flexibles (318) sur la section formant bord de périmètre de la portion formant châssis (314) faisant saillie dans une direction axialement vers l'intérieur jusque dans le boîtier et étant configurées et agencées pour se mettre en prise avec l'épaulement (123) des nervures axiales (119) sur le boîtier lorsque la fermeture d'extrémité (304) est fixée à l'extrémité ouverte du boîtier.

11. La cartouche filtrante de la revendication 10, où la pluralité de pattes flexibles (318) sont espacées uniformément autour de la section formant bord de périmètre de la portion formant châssis (314), et la série de nervures axiales (119) sont espacées uniformément autour de la surface intérieure (108) du boîtier de façon que chaque patte flexible (318) est en prise avec une nervure axiale (119) respective lorsque la fermeture d'extrémité (304) est fixée à l'extrémité ouverte du boîtier ; et
où chaque patte flexible (318) inclut une portion à fente (322) dans laquelle la nervure axiale (119) respective est logée, où le logement de la patte flexible dans la portion à fente (322) agit pour empêcher une rotation de la fermeture d'extrémité (304) par rapport au boîtier (102).

12. La cartouche filtrante de la revendication 10, où les pattes flexibles (318) ont chacune une portion de patte encliquetable (320) tournée radialement vers l'extérieur, où l'interférence mécanique entre la portion de patte encliquetable (320) tournée vers l'extérieur et l'épaulement (123) fournit une retenue axiale.

13. La cartouche filtrante de la revendication 10, où la fermeture d'extrémité (304) inclut une première rainure (328) qui s'étend autour d'une circonférence d'une surface de périmètre extérieur de la portion formant châssis annulaire (314), la première rainure (328) étant configurée pour loger un joint torique (130) ; et
où le boîtier inclut une deuxième rainure (138) autour d'une circonférence de la surface intérieure (108) positionnée à proximité de la première rainure (328) lorsque la fermeture d'extrémité (304) est fixée à l'extrémité ouverte du boîtier, la deuxième rainure (128) étant configurée pour loger le joint torique (130).

14. La cartouche filtrante de la revendication 1, où la géométrie coopérante inclut en outre un mécanisme anti-rotation pour empêcher une rotation de la fermeture d'extrémité (404) par rapport au boîtier (102), le mécanisme anti-rotation étant configuré pour empêcher une rotation de la fermeture d'extrémité (404) par rapport au boîtier (102) uniquement par le biais d'une interférence mécanique.

15. La cartouche filtrante de la revendication 14, où le mécanisme anti-rotation comprend : une pluralité de fentes de positionnement axiales (140) et de pattes de positionnement axiales (406) espacées les unes des autres autour d'une section formant bord de périmètre de la portion formant châssis (414) et d'un bord extérieur de l'extrémité ouverte du boîtier, les pattes de positionnement axiales (406) et les fentes de positionnement axiales (140) étant configurées et agencées pour se mettre en prise entre elles afin d'aligner rotationnellement la fermeture d'extrémité (404) et le boîtier lorsque la fermeture d'extrémité (404) est fixée à l'extrémité ouverte du boîtier.

16. La cartouche filtrante de la revendication 14, où le mécanisme anti-rotation comprend :
une pluralité de pattes (142) faisant saillie radialement vers l'intérieur espacées les unes des autres autour de la circonférence de la surface intérieure (108) du boîtier ; et
une pluralité de fentes (506) faisant saillie radialement vers l'intérieur espacées autour d'une surface de périmètre d'une portion formant châssis annulaire (514) de la fermeture d'extrémité (504) ;
où une mise en prise entre chaque patte de la pluralité de pattes (142) faisant saillie radialement vers l'intérieur et une fente (506) faisant saillie radialement vers l'intérieur respective empêche une rotation de la fermeture d'extrémité (504) par rapport au boîtier (102).

17. La cartouche filtrante de la revendication 1, où la fermeture d'extrémité (104 ; 204 ; 304 ; 404 ; 504) inclut en outre une pluralité de nervures de support radiales (116 ; 216 ; 316 ; 416) faisant saillie entre l'organe de positionnement d'élément (112 ; 212 ; 312 ; 412) et la portion de fixation rigide de la portion formant châssis (114 ; 214 ; 314 ; 414 ; 514).
